Europäisches Patentamt

European Patent Office

Office européen des brevets

(11) Veröffentlichungsnummer: **0 300 415 B1**

(12) **EUROPÄISCHE PATENTSCHRIFT**

(45) Veröffentlichungstag der Patentschrift: **24.11.93**

(21) Anmeldenummer: **88111554.7**

(22) Anmeldetag: **18.07.88**

(51) Int. Cl.⁵: **G02C 7/02**

(54) **Brillenglas mit astigmatischer Wirkung.**

(30) Priorität: **18.07.87 DE 3723853**

(43) Veröffentlichungstag der Anmeldung:
**25.01.89 Patentblatt 89/04**

(45) Bekanntmachung des Hinweises auf die
Patenterteilung:
**24.11.93 Patentblatt 93/47**

(84) Benannte Vertragsstaaten:
**AT CH DE ES FR GB IT LI NL SE**

(56) Entgegenhaltungen:
**EP-A- 0 039 498        EP-A- 0 101 972**
**WO-A-86/01308        DE-A- 2 707 601**
**GB-A- 2 034 498        GB-A- 2 191 017**
**US-A- 4 181 409**

(73) Patentinhaber: **Optische Werke G. Rodenstock**
**Isartalstrasse 43**
**D-80469 München(DE)**

(72) Erfinder: **Guilino, Günther**
**Kriegelsteinerstr. 3**
**D-8000 München 70(DE)**
Erfinder: **Pfeiffer, Herbert**
**Georg-Hann-Str. 16**
**D-8000 München 60(DE)**
Erfinder: **Altheimer, Helmut**
**Dreimühlenstr. 5**
**D-8000 München 5(DE)**

(74) Vertreter: **Münich, Wilhelm, Dr. et al**
**Kanzlei Münich, Steinmann, Schiller**
**Wilhelm-Mayr-Str. 11**
**D-80689 München (DE)**

**Beschreibung**

Technisches Gebiet

Die Erfindung bezieht sich auf ein Brillenglas mit astigmatischer Wirkung.

Stand der Technik

Brillengläser mit astigmatischer Wirkung weisen meist eine sphärische und eine torische Fläche auf. Derartige Gläser haben eine Reihe von Nachteilen:

Die Abbildungsfehler sind lediglich für den Scheitel des Glases optimal korrigiert und nehmen entlang der Hauptschnitte und zusätzlich zwischen den Hauptschnitten nach außen hin zu. Bei Gläsern mit positiver Brechkraft ist die Mittendicke, bei Gläsern mit negativer Brechkraft die Randdicke sehr groß, zudem variiert die Randdicke aufgrund der Torizität des Glases längs des Umfangs. Dies ist insbesondere bei Gläsern in sog. randlosen Fassungen äußerst störend.

Darüberhinaus sind bei stark unterschiedlichen Sehfehlern beider Augen auch die Gläser äußerlich sehr verschieden.

Durch die Verwendung asphärischer Hauptschnitte, beispielsweise von Kegelschnitten, lassen sich zwar die Abbildungsfehler verringern, die erzielbare Dickenreduktion ist jedoch nur sehr gering (GB-A-2 034 498).

Beschreibung der Erfindung

Der Erfindung liegt die Aufgabe zugrunde, ein Brillenglas mit astigmatischer Wirkung anzugeben, bei dem die kritische Dicke, d.h. die Mittendicke bei Gläsern mit positiver Wirkung bzw. die Randdicke bei Gläsern mit negativer Wirkung und/oder Randdickenvariation längs des Umfangs wesentlich im Vergleich zum Stand der Technik reduziert ist.

Eine erfindungsgemäße Lösung dieser Aufgabe ist mit ihren Weiterbildungen in den Patentansprüchen gekennzeichnet:

Erfindungsgemäß ist erkannt worden, daß eine beträchtliche Reduzierung der kritischen Dicke und/oder der Variation der Randdicke längs des Glasumfangs dadurch erreicht werden kann, daß der Brechungsindex bei Plusgläsern mindestens längs des stärker brechenden Hauptschnitts und bei Minusgläsern mindestens längs des schwächer brechenden Hauptschnitts variiert, so daß wenigstens ein Teil der zylindrischen Wirkung durch die Variation des Brechungsindex aufgebracht wird. Da bei Plusgläsern der stärker brechende und bei Minusgläsern der (im mathematischen Sinne) schwächer brechende Hauptschnitt die kritische Dicke, also die Mittendicke bzw. die Randdicke bestimmt, wird im folgenden dieser Hauptschnitt auch als kritischer Hauptschnitt bezeichnet. Entsprechend wird der andere Hauptschnitt als unkritischer Hauptschnitt bezeichnet.

Im Rahmen dieses erfindungsgemäßen Grundgedankens ist es selbstverständlich möglich, zusätzlich zur Variation des Brechungsindex längs des kritischen Hauptschnitts den Brechungsindex auch in Richtung des anderen Hauptschnitts und/oder in Richtung der optischen Achse des Glases variieren zu lassen. Hierdurch lassen sich die Abbildungsfehler über das gesamte Brillenglas sehr klein halten.

In jedem Falle ist es jedoch besonders vorteilhaft, wenn die Variation des Brechungsindex (Brechzahl) längs des (im mathematischen Sinne) schwächer brechenden Hauptschnitts spiegelsymmetrisch zur Ebene des zweiten (unkritischen) Hauptschnitts ist (Anspruch 2).

Für die meisten Anwendungsfälle ist jedoch die im Anspruch 3 gekennzeichnete Weiterbildung völlig ausreichend, bei der der Brechungsindex lediglich längs des kritischen Hauptschnitts variiert. Überraschenderweise ist es auch bei einer derart einfachen - eindimensionalen - Variation des Brechungsindex möglich, nicht nur die kritische Dicke beträchtlich zu reduzieren, sondern auch bestimmte Vorgaben hinsichtlich der Abbildungseigenschaften und insbeson dere der Größe der Abbildungsfehler längs des kritischen Hauptschnitts einzuhalten, d.h. durch die Variation eines einzigen Parameters ist es möglich, zwei und sogar mehr Größen unter vorgegebenen Grenzen zu halten.

Darüberhinaus hat die eindimensionale Ausbildung des Gradienten des Brechungsindex den Vorteil, daß sie vergleichsweise einfach hergestellt werden kann. Trotzdem ist ein derartiger eindimensionaler Gradient bislang noch nicht in der Literatur in Betracht gezogen worden. Hierzu wird beispielsweise auf den Übersichtsartikel "Technological Trends -Gradient Index Optics" in Photonics Spectra, März 87, S71 folgende und insbesondere den Abschnitt auf S.71 "Types of gradients" verwiesen

Einen völligen Abbau der Variation der Randdicke und gleichzeitig eine sehr große Reduzierung der kritischen Dicke, d.h. der Mittendicke bei Gläsern mit positiver Wirkung und der Randdicke bei Gläsern mit

2

negativer Wirkung bzw. beider Größen bei Gläsern, bei denen ein Hauptschnitt positive und ein Hauptschnitt negative Wirkung hat, erhält man durch die im Anspruch 4 gekennzeichnete Weiterbildung, bei der bis zu mittleren Zylinderwirkungen, d.h. Zylinderwirkungen von etwa 2-3 dpt die zylindrische Wirkung ausschließlich durch die Variation des Brechungsindex aufgebracht wird. Damit ist es nämlich möglich, Gläser mit rotationssymmetrischen Flächen zu verwenden, so daß keine Randdickenvariation auftreten kann.

Als rotationssymmetrische Flächen können natürlich asphärische Flächen verwendet werden. Diese sind beispielsweise bei hohen Wirkungen bevorzugt, da dann die kritische Dicke und insbesondere die Mittendicke bei Gläsern mit positiver Wirkung beträchtlich reduziert werden kann. Darüberhinaus lassen sich durch die Verwendung von asphärischen rotationssymmetrischen Flächen die Abbildungsfehler zumindest entlang beider Hauptschnitte wesentlich reduzieren (Anspruch 6). Ferner können auch atorische Flächen verwendet werden, d.h. Flächen, die von der torischen Form abweichen und bei denen wenigstens ein Hauptschnitt asphärisch ausgebildet ist (Anspruch 7).

In vielen Anwendungsfällen ist es jedoch völlig ausreichend, wenn gemäß Anspruch 4 beide Flächen sphärische Flächen sind.

Im Anspruch 8 ist eine Größenordnung für die Brechzahlbzw. Brechungsindexvariation in unmittelbarer Umgebung der optischen Achse angegeben.

Kurze Beschreibung der Zeichnung

Die Erfindung wird nachstehend anhand von Ausführungsbeispielen unter Bezugnahme auf die Zeichnung näher beschrieben, in der zeigen:

| | |
|---|---|
| Fig. 1 | einen Linsenschnitt, |
| Fig. 2 | den Verlauf des Brechungsindex, |
| Fig. 3 bis 6 | die astigmatische Abweichung und den Einstellfehler |
| | für ein bekanntes Brillenglas mit einer Zylinderwirkung von +2 dpt., |
| Fig. 7a und 7b | einen Linsenschnitt, |
| Fig. 8a und 8b | die Variation des Brechungsindex, |
| Fig. 9 bis 12 | die astigmatische Abweichung und den Einstellfehler |
| | für ein erfindungsgemäßes Brillenglas mit einer Zylinderwirkung von +2 dpt., |
| Fig. 13 | einen Linsenschnitt, |
| Fig. 14 | die Variation des Brechungsindex, |
| Fig. 15 bis 18 | die astigmatische Abweichung und den Einstellfehler |
| | für ein bekanntes Brillenglas mit einer Zylinderwirkung von +4 dpt., |
| Fig. 19a und b | einen Linsenschnitt, |
| Fig. 20a und b | die Variation des Brechungsindex, |
| Fig. 21 bis 24 | die astigmatische Abweichung und den Einstellfehler |
| | für ein erstes Ausführungsbeispiel mit einer Zylinderwirkung von +4 dpt., |
| Fig. 25a und b | einen Linsenschnitt, |
| Fig. 26a und b | die Variation des Brechungsindex |
| Fig. 27 bis 30 | die astigmatische Abweichung und den Einstellfehler |
| | für ein zweites Ausführungsbeispiel mit einer Zylinderwirkung von +4 dpt., |

Beschreibung von Ausführungsbeispielen

In sämtlichen Figuren wird von einem Koordinatensystem ausgegangen, bei dem die x-Achse horizontal und die y-Achse vertikal verläuft. Der Ursprung des Koordinatensystems liegt in der geometrischen Glasmitte.

Der Winkel $\sigma'$ ist der sog. augenseitige Blickwinkel, anders ausgedrückt der halbe Öffnungswinkel des Blickkegels.

Der Winkel $\phi$ ist ein Polarwinkel (Azimutwinkel), wobei gilt:

x-Achse: $\phi = 0°$, y-Achse: $\phi = 90°$;

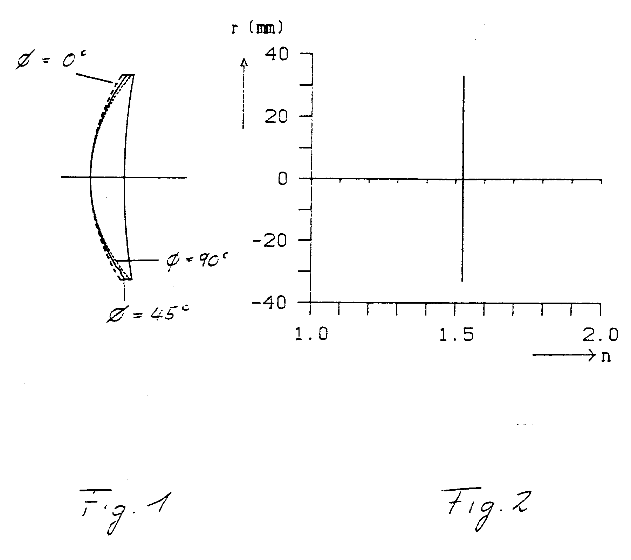

In den Fig. 1, 7a und 7b, 13, 19a und 19b sowie 25a und 25b sind Schnitte durch das jeweilige Brillenglas für die Schnittebenen $\phi = 0°$ und $90°$ sowie manchmal auch für $\phi = 45°$ dargestellt. Diese Schnitte sind jeweils mit $0°$, $45°$, $90°$ bezeichnet.

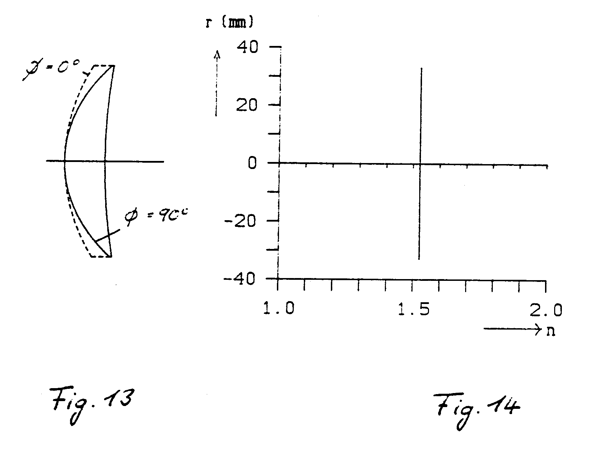

In den Fig. 2, 8a und 8b, 14, 20a und 20b sowie 26a und 26b ist der Verlauf des Brechungsindex (Brechzahl) n auf der Abszisse als Funktion des auf der Ordinate aufgetragenen Abstandes in der jeweils in dieser Fig. betrachteten Schnittebene $\phi$ = const als Funktion des Winkels $\sigma'$ bzw. als Funktion des Winkels $\phi$ (Ordinate) für die Schnittfläche $\sigma'$ = const. dargestellt. Im Falle der Figuren mit $\phi$ = const gilt die Ordinate dieser Figuren auch für den links dargestellten "Linsenschnitt".

Die den Brechungsindex wiedergebenden Kurven sind entsprechend mit 0°, 45°, 90° für die Schnittebenen $\phi$ = 0°, 45°, 90° bzw. mit $\sigma'$ = 30° bezeichnet, wenn der Winkel $\sigma'$ konstant gehalten ist.

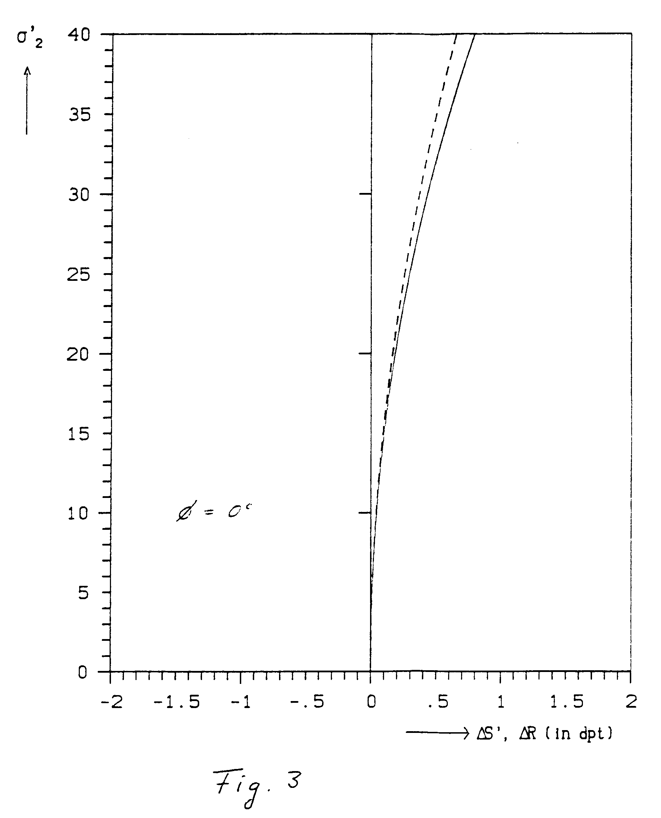

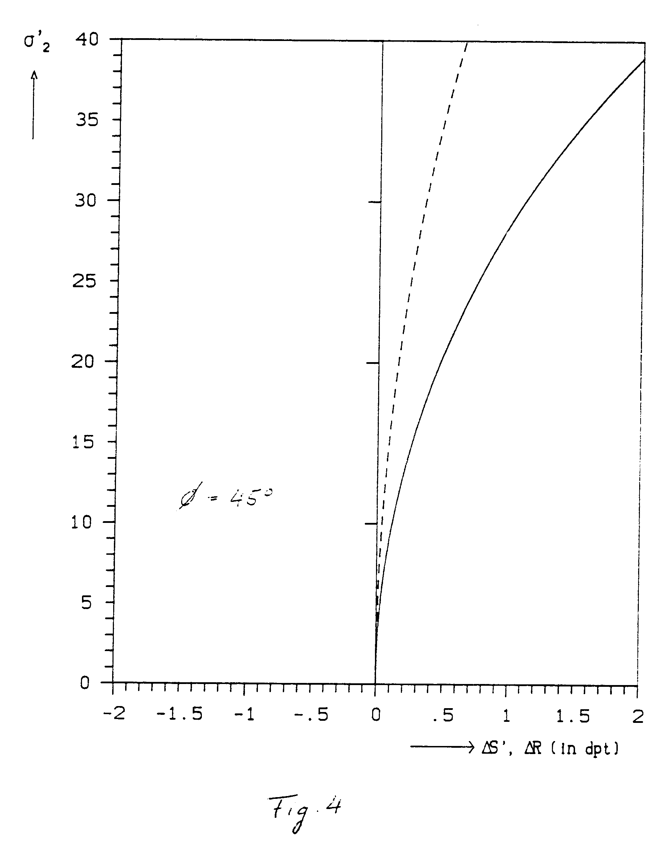

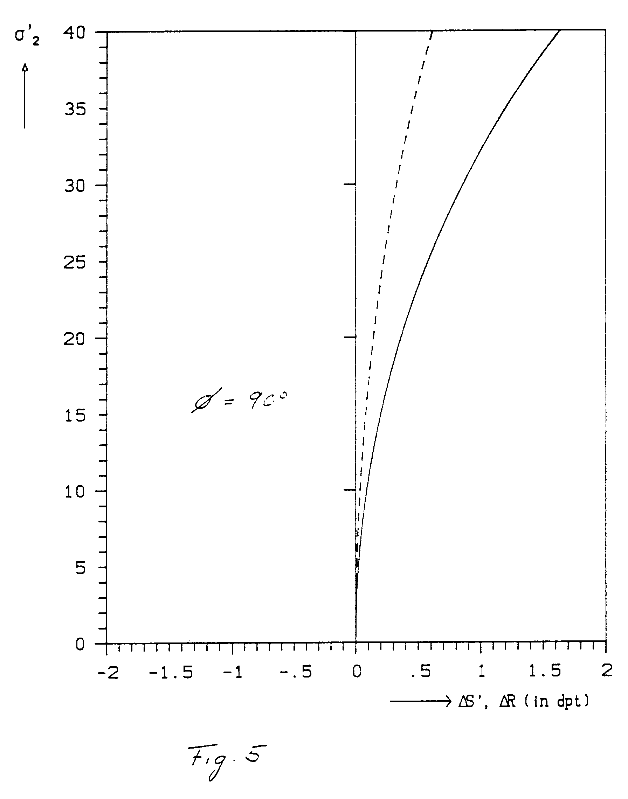

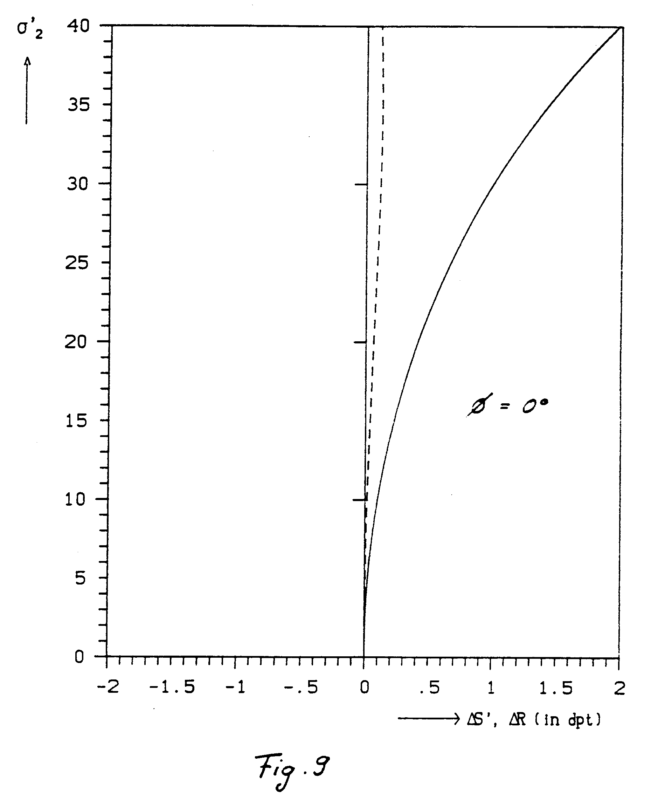

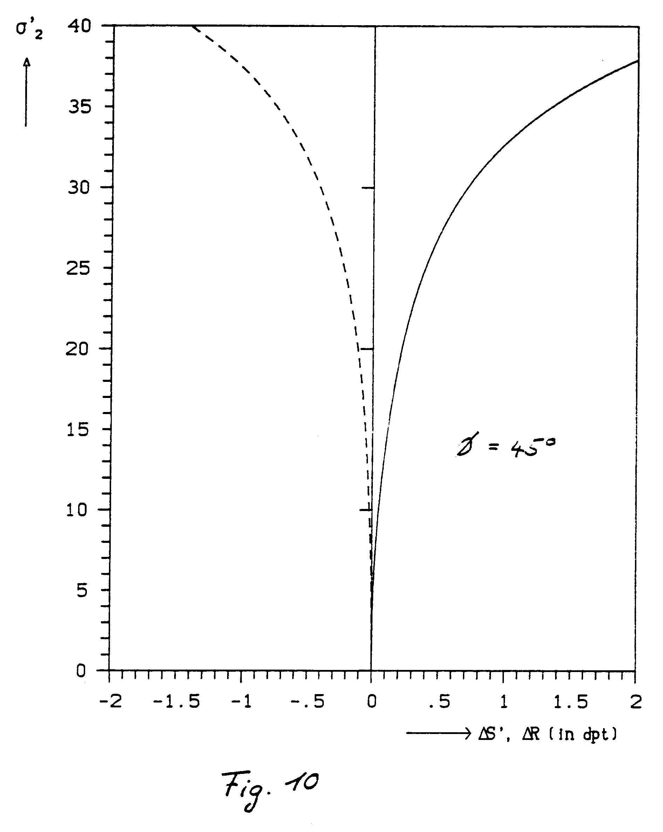

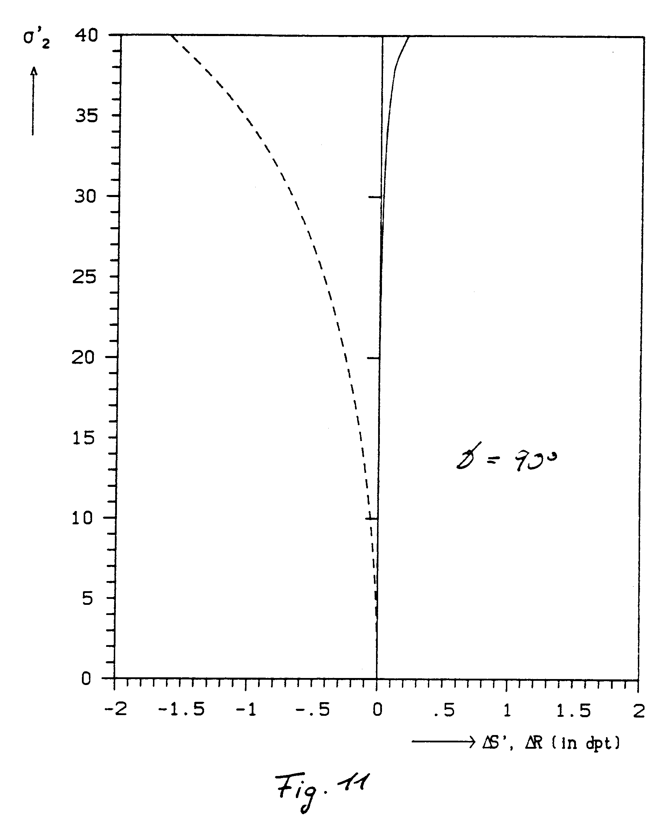

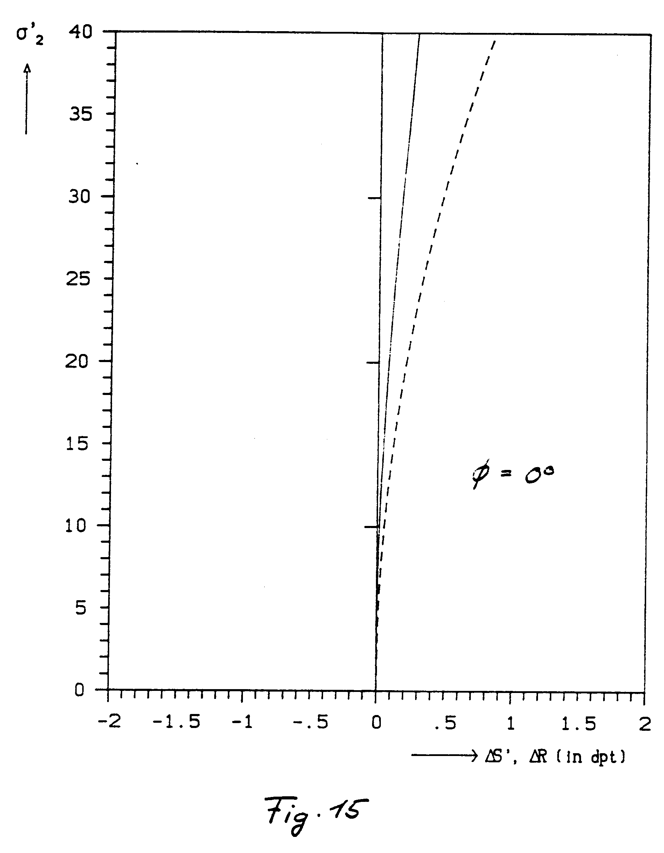

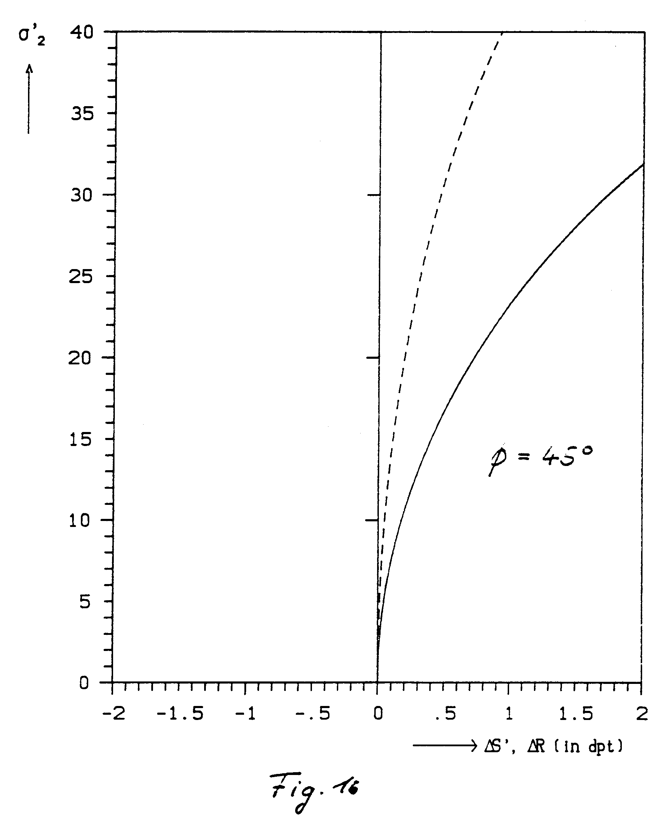

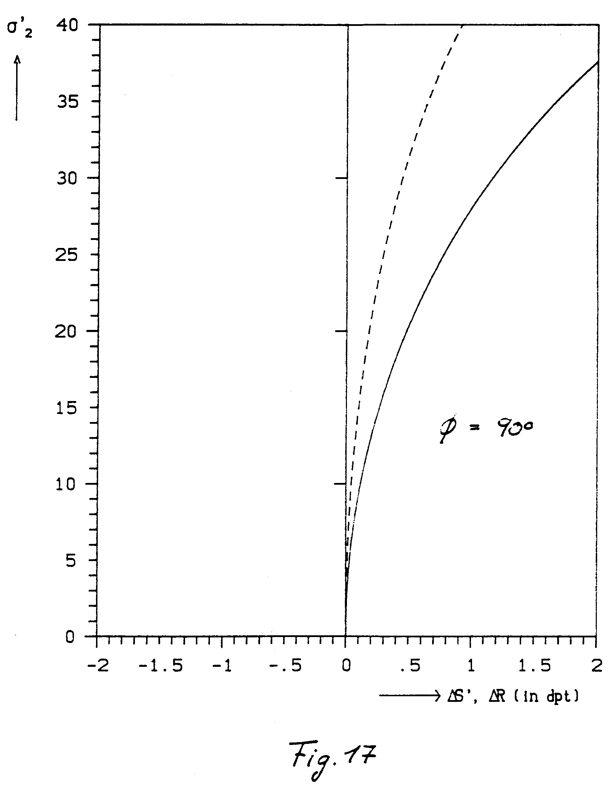

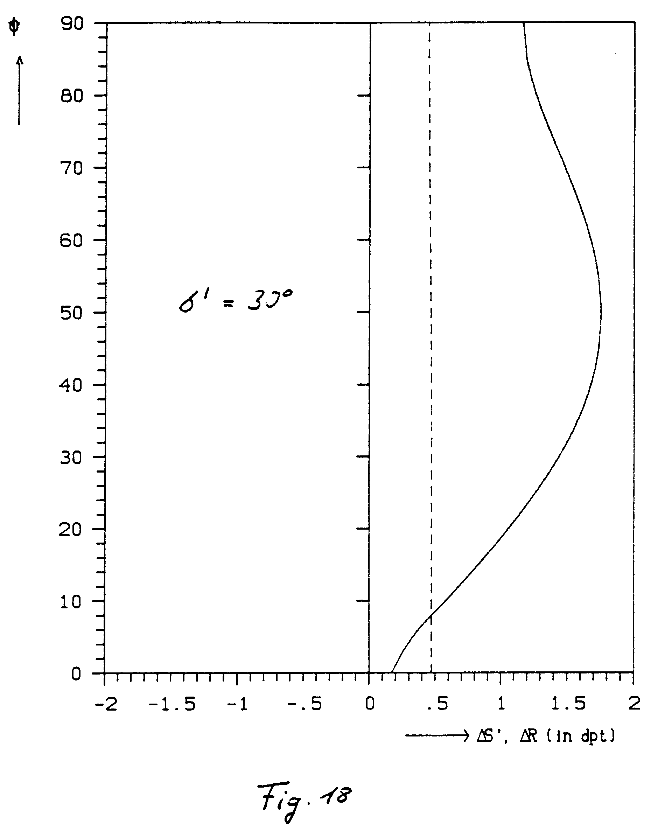

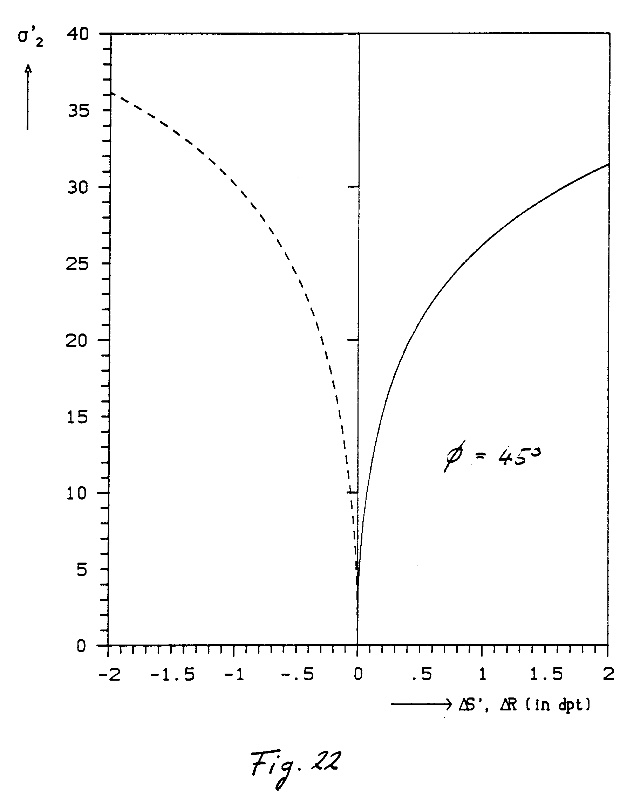

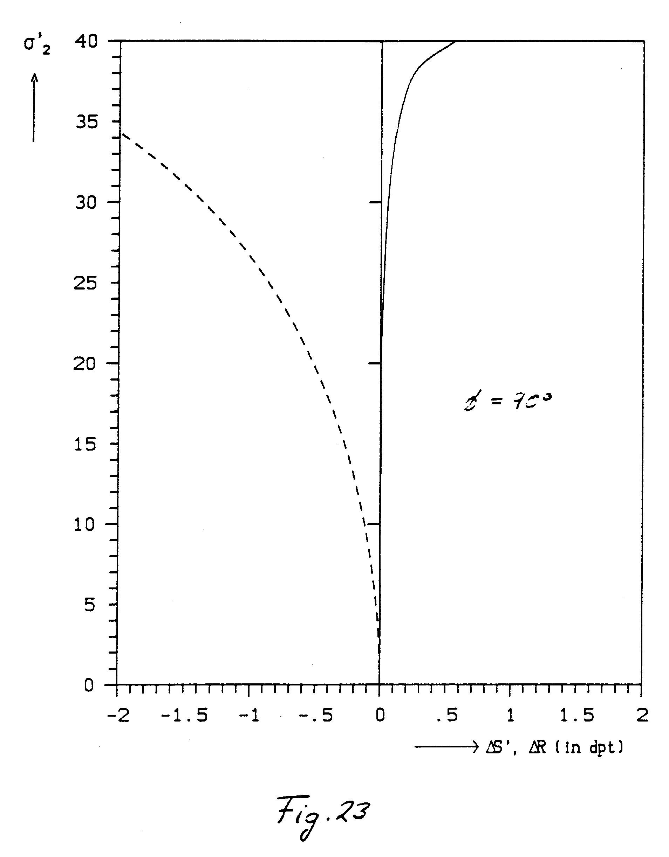

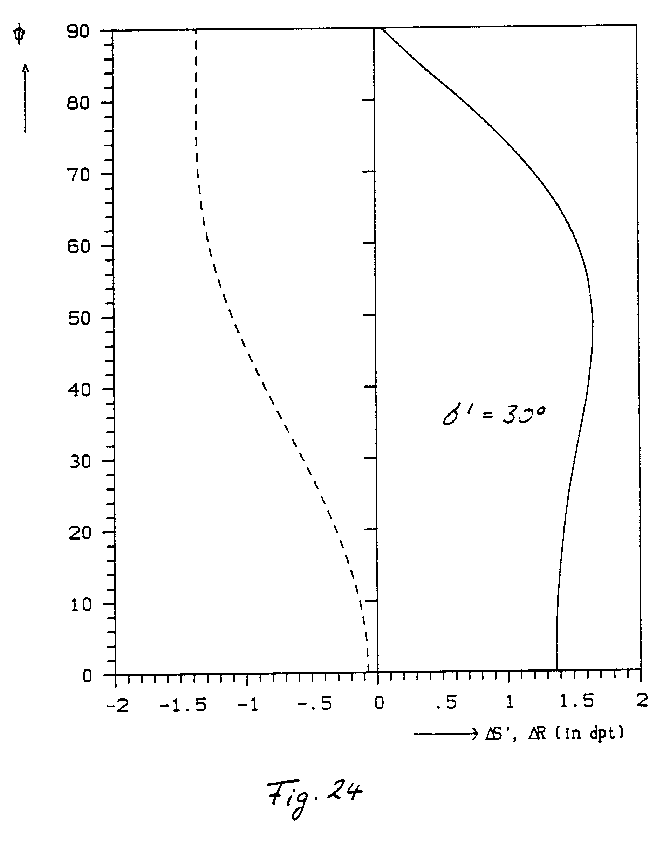

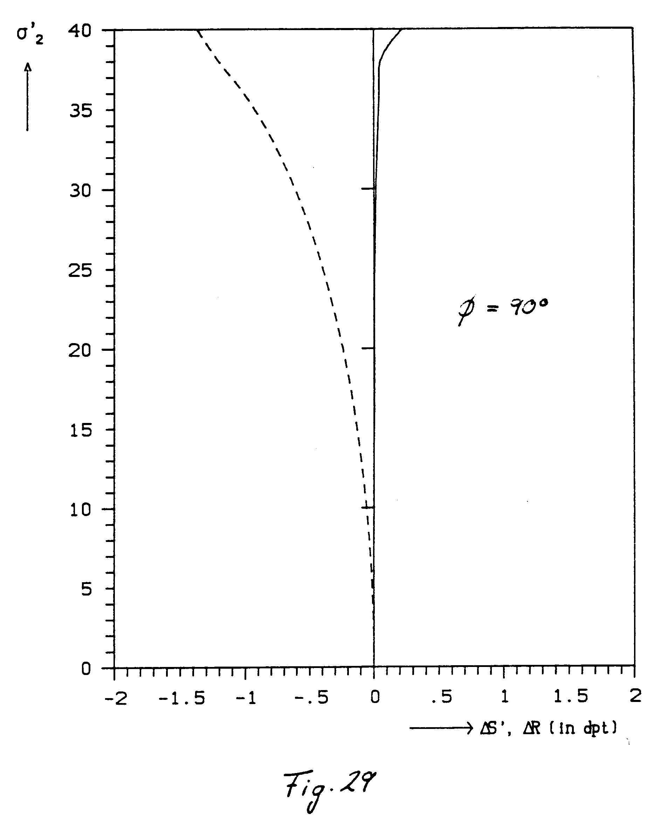

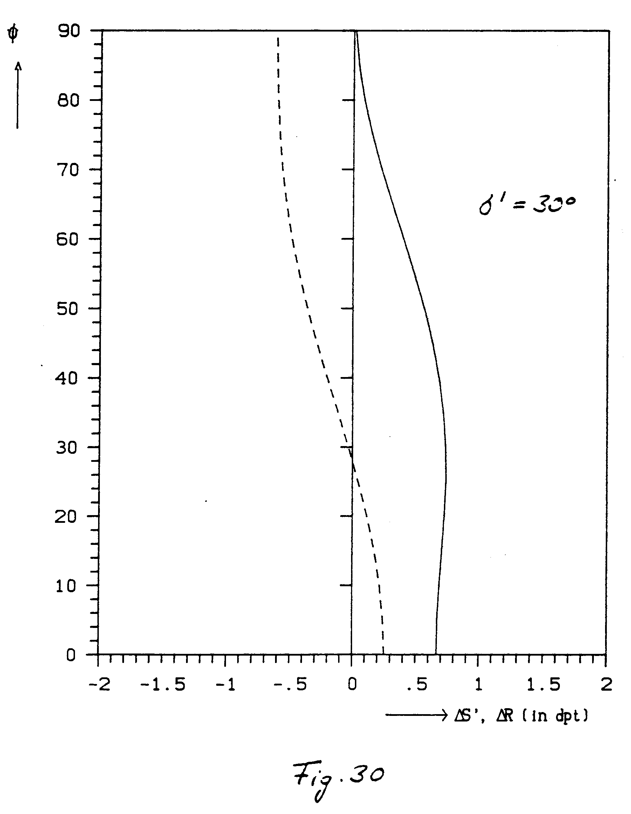

In den Fig. 3-6, 9-12, 15-18, 21-24 und 27-30 ist die astigmatische Abweichung $\Delta S'$ (durchgezogenene Linien) und der Einstellfehler $\Delta R$ (gestrichelte Linien) d.h. die mittlere Abweichung vom Rezeptwert, des Systems Brillenglas/Auge bei Zentrierung mit einem Abstand Augendrehpunkt/hinterer Glasscheitel b' = 28,5mm dargestellt, wobei der optische Augendrehpunkt auf der optischen Achse des Glases liegt.

Ferner ist für die Berechnung der Kurven die angenommen worden, daß die "Zylinderachse" des Auges in der Grundstellung in der x-Achse liegt und sich bei Blickbewegungen nur parallel zur Horizontalebene bewegt. Selbstverständlich ist es auch möglich, andere "Augenmodelle" bei der Berechnung des Systems Auge/Brillenglas zugrunde zu legen, beispielsweise die Listing'sche Regel. Dabei erhält man z.T. für die erfindungsgemäßen Gläser bessere Ergebnisse, d.h. kleinere Werte für die astigmatische Abweichung $\Delta S'$ und den Einstellfehler $\Delta R$.

Die Fig. 1 bis 6 zeigen ein herkömmliches Brillenglas mit einer Zylinderwirkung von +2 dpt und einer Zylinderachse von ($\phi$ =) 0° sowie einem homogenen Brechungsindex n = 1,525.

Die Vorderfläche ist ein tonnenförmiger Torus mit einer Scheitel-Brechkraft $D_{ji}$ = (n-1)/$r_{ji}$, wobei $r_{ji}$ der Krümmungsradius der Fläche j in dem Schnitt i ist.

$D_{1x}$ = 6,75 dpt. $D_{1y}$ = 8,59 dpt.

Die augenseitige Fläche ist - wie bei jedem der im folgenden besprochenen Ausführungsbeispiele - eine sphärische Fläche mit

$D_{2x}$ = $D_{2y}$ = -2,00 dpt.

Bei einem Durchmesser von 66 mm hat ein derartiges Brillenglas

| bei einer minimalen Randdicke | von 0,50 mm |
| eine maximale Randdicke | von 2,8 mm |
| und eine Mittendicke | von 8,09 mm |

Damit hat das Brillenglas eine sphärische Wirkung von 5,0 dpt und eine Zylinderwirkung von +2,00 dpt bei einer Achse von 0°.

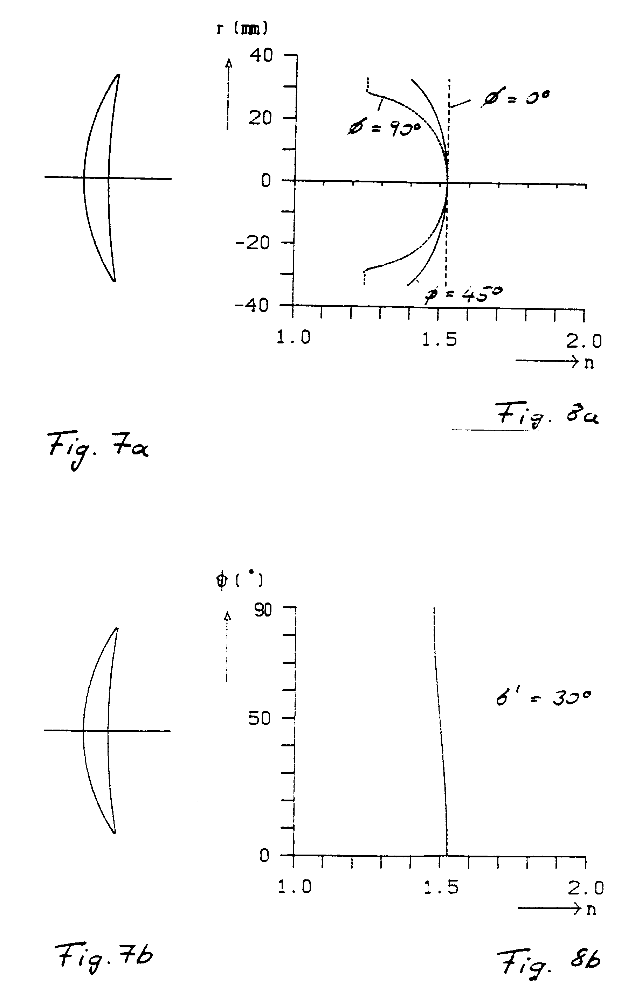

Die Fig. 7 bis 12 zeigen ein erfindungsgemäßes Brillenglas mit einer Zylinderwirkung von +2 dpt und einer Zylinderachse von ($\phi$ =) 0° sowie einem erfindungsgemäß variierenden Brechungsindex, dessen Variation in Fig. 8 für verschiedene Werte von $\phi$ bzw $\sigma'$ dargestellt ist.

Sowohl die Vorderfläche als auch die augenseitige Fläche sind sphärische Flächen mit einer Scheitel-Brechkraft D

$D_{1x}$ = $D_{1y}$ = 6,82 dpt.
$D_{2x}$ = $D_{2y}$ = -2,00 dpt.

Die Zylinderwirkung wird durch die Variation des Brechungsindex n erzeugt, der eine Funktion von y ist.
Bei einem Durchmesser von 66 mm hat ein derartiges Brillenglas

| bei einer gleichmäßigen Randdicke | von 0,50 mm |
| eine Mittendicke | von 5,85 mm |

Ein Vergleich des erfindungsgemäßen Brillenglases mit dem herkömmlichen Glas zeigt folgendes:
Die Mittendicke, d.h. die kritische Dicke bei einem Brillenglas mit positiver Wirkung wird um ca 27% und die maximale Randdicke sog. um ca 80% verringert, ohne daß die Abbildungsfehler schlechter würden. Im Gegenteil, das erfindungsgemäße Brillenglas weist im Vergleich mit einem herkömmlichen torischen Glas mit sphärischen Hauptschnitten sogar günstigere Abbildungseigenschaften auf. Insbesondere nimmt der Einstellfehler R keine nennenswerten positiven Werte an, kann also durch geringfügiges Akkommodieren ausgeglichen werden.

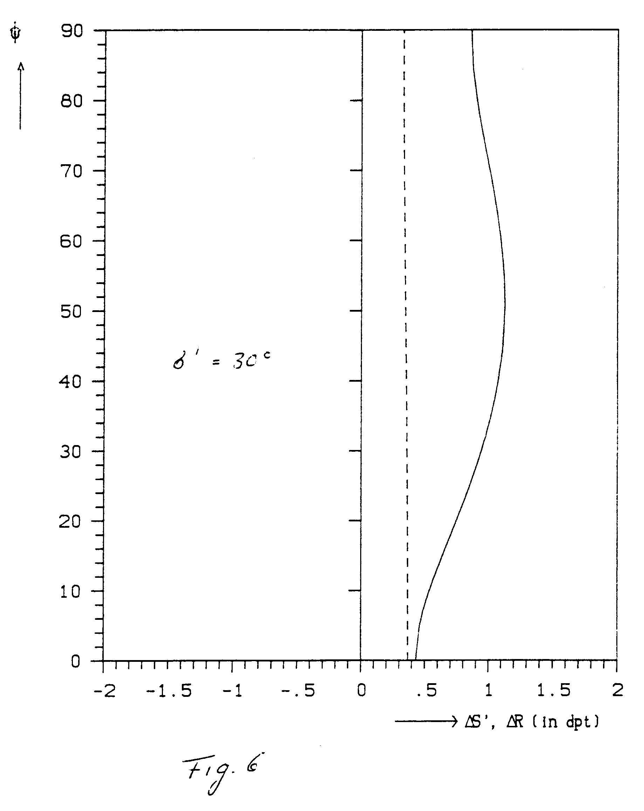

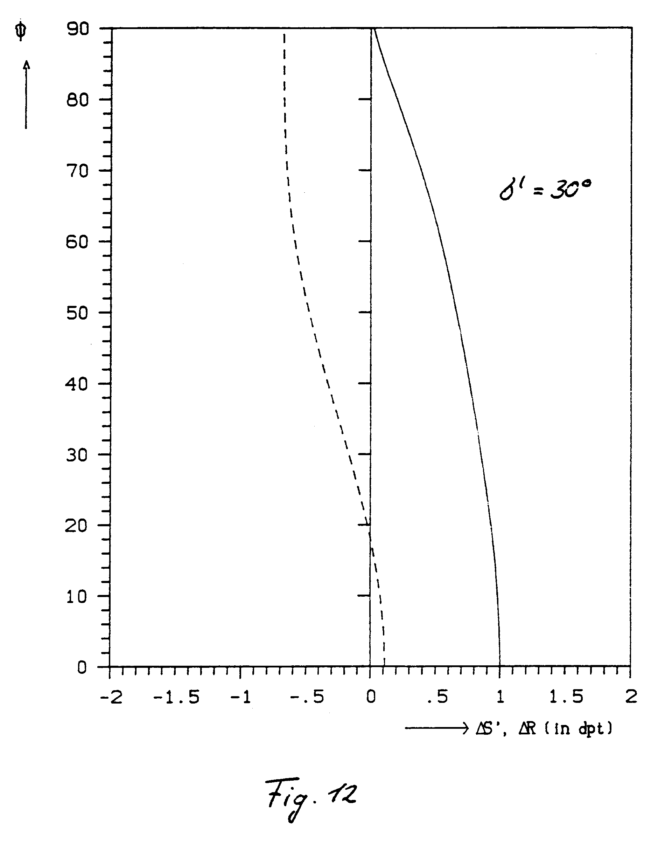

Ferner zeigt ein Vergleich der Fig. 12 mit Fig. 6, die die Bildfehler auf einem Kegel mit konstantem Blickwinkel $\sigma'$ wiedergeben, daß das erfindungsgemäße Brillenglas wesentlich bessere Abbildungseigenschaften hat.

Besonders überraschend ist jedoch, daß es trotz der Verwendung eines lediglich eindimensionalen Gradienten des Brechungsindex und damit eingeschränkter Variationsmöglichkeit bei der Korrektur möglich ist, zusätzlich zu den Forderungen bezüglich Mitten- und Randdicke bestimmte Randbedingungen für die Abbildungsfehler einzuhalten:

Bei dem in den Fig. 7 bis 12 dargestellten erfindungsgemäßen Brillenglas ist die Fehlerkorrektur so ausgelegt, daß für $\phi = 0°$ der Einstellfehler $\Delta R$ und für $\phi = 90°$ der Astigmastismus $\Delta S'$ bis zu Blickwinkeln $\sigma' \approx 30°$ in etwa 0 ist.

Die Berechnung des eindimensionalen Gradienten des Brechungsindex $n(y)$ ist bei dem gezeigten Ausführungsbeispiel mit Spline-Funktionen erfolgt, der genaue Verlauf geht aus den Figuren 8a und 8b hervor. Nähert man den mit Spline-Funktionen erhalten Brechungsindex $n(y)$ im Bereich der optischen Achse mit einer Taylorreihe

$$n(y) = n_o + n_{2y}*y^2 + ....$$

an, so erhält man für den Koeffizienten

$$n_{2y} = -1{,}661*10^{-4}\ [mm^{-2}].$$

Die Fig. 13 bis 18 zeigen ein weiteres herkömmliches Brillenglas mit einer Zylinderwirkung von $+4$ dpt und einer Zylinderachse von $(\phi =)\ 0°$ sowie einem homogenen Brechungsindex $n = 1{,}525$.

Die Vorderfläche ist ein tonnenförmiger Torus mit einer Scheitel-Brechkraft D

$$D_{1x} = 6{,}68\ dpt.\quad D_{1y} = 10{,}23\ dpt.$$

Die augenseitige Fläche ist eine sphärische Fläche mit

$$D_{2x} = D_{2y} = -2{,}00\ dpt.$$

Bei einem Durchmesser von 66 mm hat ein derartiges Brillenglas

| bei einer minimalen Randdicke | von 0,50 mm |
| eine maximale Randdicke | von 5,25 mm |
| und eine Mittendicke | von 10,43 mm |

Damit hat das Brillenglas eine sphärische Wirkung von 5,0 dpt und eine Zylinderwirkung von $+4{,}00$ dpt bei einer Achslage von $0°$.

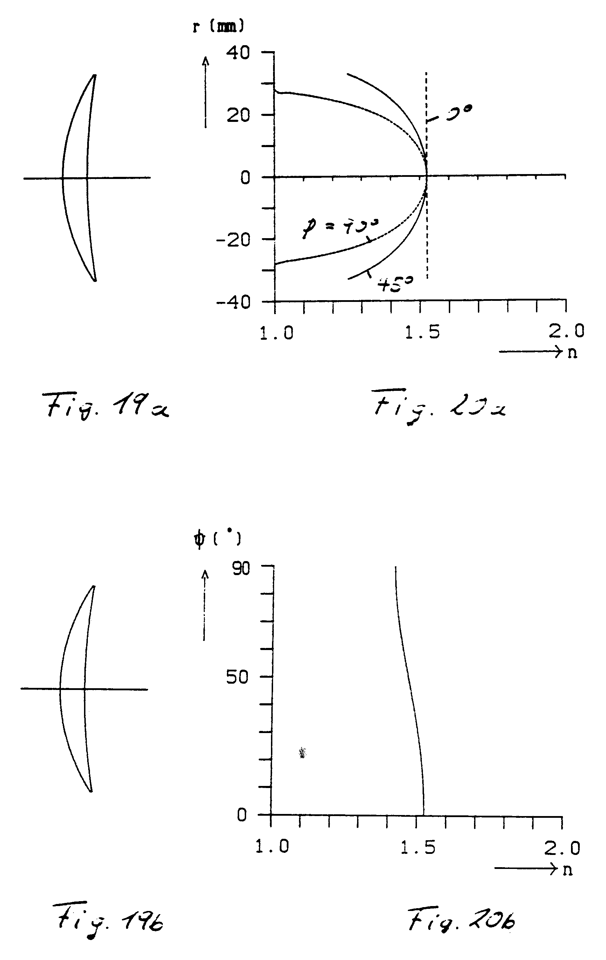

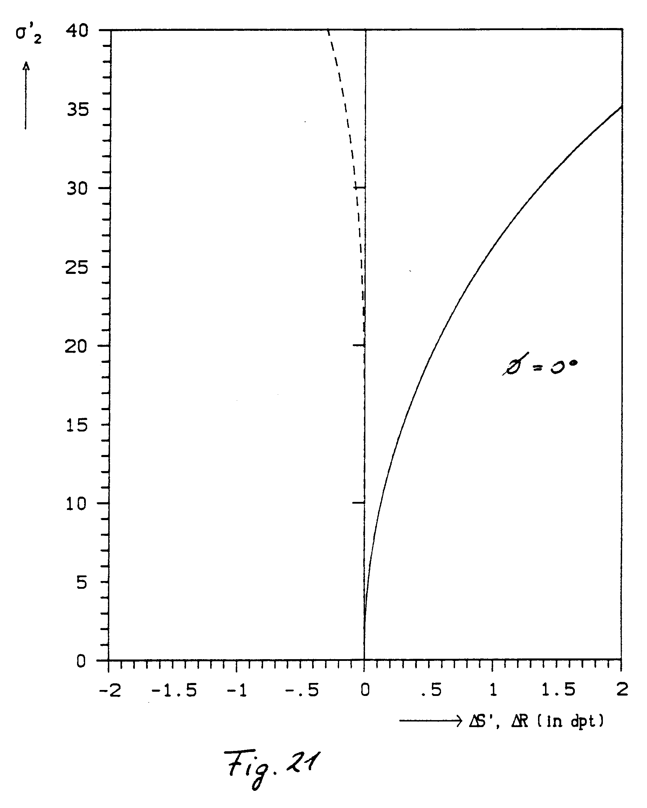

Die Fig. 19 bis 24 zeigen ein erstes Ausführungsbeispiel eines erfindungsgemäßes Brillenglases mit einer Zylinderwirkung von $+4$ dpt und einer Zylinderachse von $(\phi =)\ 0°$ sowie einem erfindungsgemäß variierenden Brechungsindex, dessen Variation in Fig. 20 dargestellt ist.

Sowohl die Vorderfläche als auch die augenseitige Fläche sind sphärische Flächen mit einer Scheitel-Brechkraft D

$$D_{1x} = D_{1y} = 6{,}82\ dpt.$$
$$D_{2x} = D_{2y} = -2{,}00\ dpt.$$

Die Zylinderwirkung wird durch die Variation des Brechungsindex n erzeugt, der eine Funktion von y ist.
Bei einem Durchmesser von 66 mm hat ein derartiges Brillenglas

| bei einer gleichmäßigen Randdicke eine Mittendicke | von 0,50 mm von 5,85 mm |
|---|---|

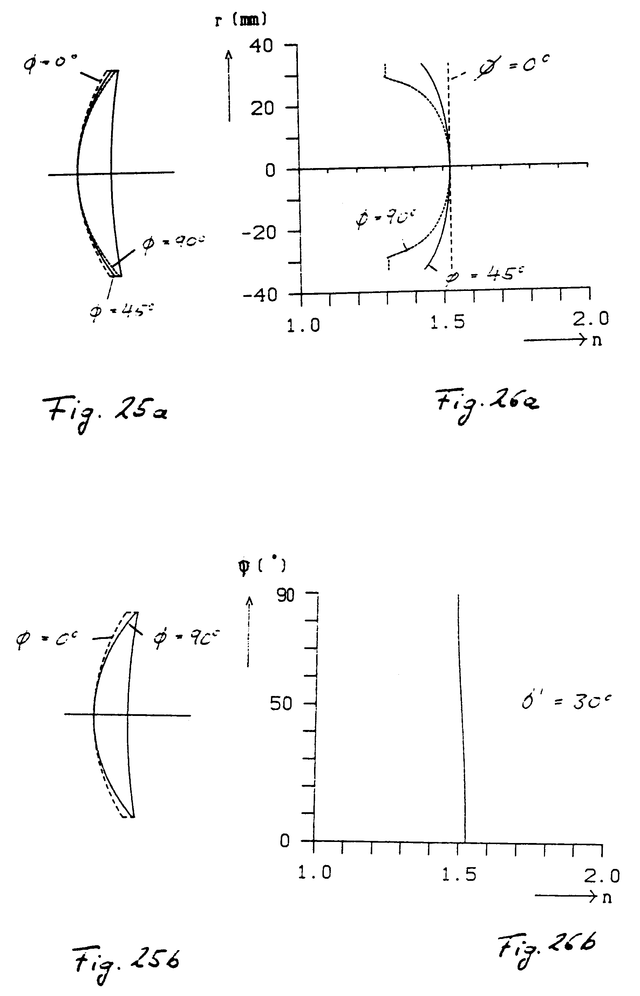

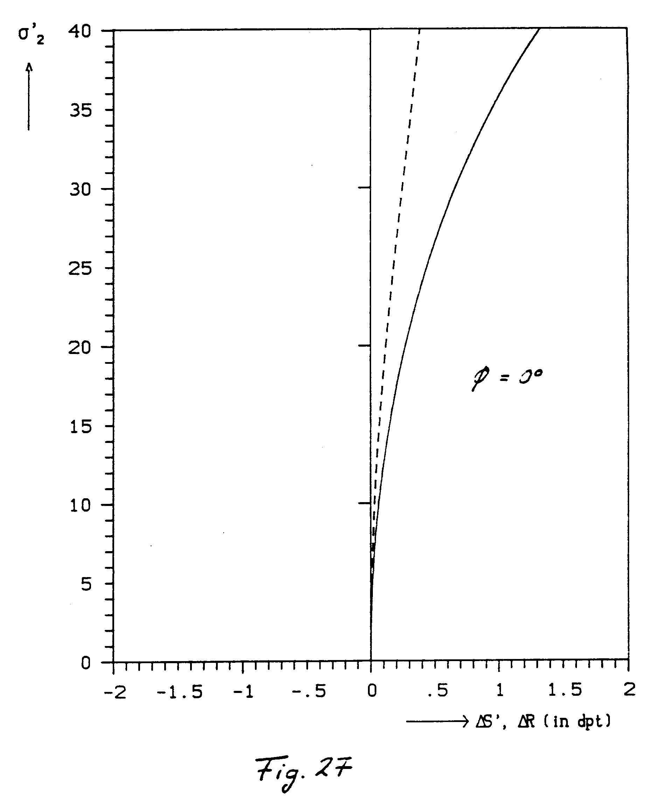

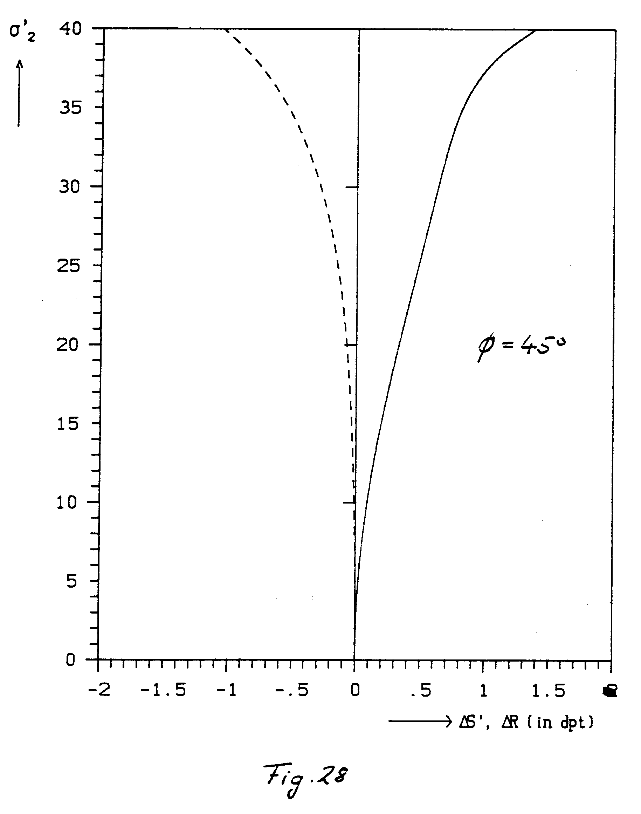

Die Fig. 25 bis 30 zeigen ein zweites Ausführungsbeispiel für ein erfindungsgemäßes Brillenglas mit einer Zylinderwirkung von +4 dpt und einer Zylinderachse von ($\phi$ =) 0° sowie zusätzlich mit einem erfindungsgemäß variierenden Brechungsindex, dessen Variation in Fig. 26 dargestellt ist.

Die Vorderfläche ist ein tonnenförmiger Torus mit einer Scheitel-Brechkraft D

$D_{1x}$ = 6,75 dpt. $D_{1y}$ = 8,59 dpt.

Die augenseitige Fläche ist eine sphärische Fläche mit

$D_{2x}$ = $D_{2y}$ = -2,00 dpt.

Bei einem Durchmesser von 66 mm hat ein derartiges Brillenglas

| bei einer minimalen Randdicke eine maximale Randdicke und eine Mittendicke | von 0,50 mm von 2,83 mm von 8,09 mm |
|---|---|

Damit hat das Brillenglas eine sphärische Wirkung von 5,0 dpt und ohne Berücksichtigung des Brechungsindex-Gradienten eine Zylinderwirkung von +2,00 dpt bei einer Achslage von 0°. Durch den eindimensionalen Verlauf n(y) des Brechungsindex wird eine zusätzliche Zylinderwirkung von +2,00 dpt bei einer Achslage von 0° erzeugt.

Ein Vergleich der beiden erfindungsgemäßen Brillengläser mit dem herkömmlichen Glas zeigt folgendes:

Die Mittendicke, d.h. die kritische Dicke bei einem Brillenglas mit positiver Wirkung, wird bei dem Ausführungsbeispiel, bei dem die gesamte Zylinderwirkung durch den Brechungsindex-Gradienten aufgebracht wird, um ca 75% und die maximale Randdicke sog. um ca 90% verringert, ohne daß die Abbildungsfehler schlechter würden. Im Gegenteil, das erfindungsgemäße Brillenglas weist im Vergleich mit einem herkömlichen torischen Glas mit sphärischen Hauptschnitten sogar günstigere Abbildungseigenschaften auf. Insbesondere wird der Einstellfehler $\Delta R$ nie positiv, kann also durch gerinfügiges Akkomodieren ausgeglichen werden.

Wie bei dem erfindungsgemäßen Ausführungsbeispiel mit einer Zylinderwirkung von +2,0 dpt ist es auch bei diesem Ausführungsbeispiel überraschenderweise möglich, trotz der Verwendung eines lediglich eindimensionalen Gradienten des Brechungsindex und damit eingeschränkter Variationsmöglichkeit bei der Korrektur zusätzlich zu den Forderungen bezüglich Mitten- und Randdicke bestimmte Randbedingungen für die Abbildungsfehler einzuhalten:

Bei dem in den Fig. 19 bis 24 dargestellten erfindungsgemäßen Ausführungsbeispiel ist die Fehlerkorrektur so ausgelegt, daß für alle Werte von $\phi$ der Einstellfehler $\Delta R \leq 0$ und für $\phi$ = 90° der Astigmastismus $\Delta S'$ bis zu Blickwinkeln $\sigma \approx 30°$ in etwa 0 ist.

Die Berechnung des eindimensionalen Gradienten des Brechungsindex erfolgt auch bei diesem Ausführungsbeispiel mit Spline-Funktionen, der genaue Verlauf geht aus den Teilfiguren 20a und b hervor. Nähert man wieder den mit Spline-Funktionen erhalten Brechungsindex n(y) im Bereich der optischen Achse mit einer Taylorreihe

$n(y) = n_o + n_{2y}{}^* y^2 + ....$

an, so erhält man in Achsnähe für den Koeffizienten

$n_{2y} = -3,314^*10^{-4}$ [mm$^{-2}$].

Bei dem Ausführungsbeispiel, bei dem die "Gesamt-Zylinderwirkung" zur Hälfte von der "torischen Flächengestaltung" und zur anderen Hälfte durch den Brechungsindex-Gradienten aufgebracht wird, ist die Mittendicke, d.h. die kritische Dicke bei einem Brillenglas mit positiver Wirkung zwar geringfügig größer als bei dem ersten Ausführungsbeispiel, bei dem die gesamte Zylinderwirkung durch den Brechungsindex-Gradienten aufgebracht wird. Verglichen mit dem herkömmlichen Brillenglas ist sie jedoch um ca 22% und die maximale Randdicke sogar um ca 45% verringert. Zusätzlich sind die Absolutwerte der Abbildungsfehler $\Delta S'$ und $\Delta R$ deitlich kleiner als bei dem ersten Ausführungsbeispiel und bei dem herkömmlichen Brillenglas. Die geringfügig positiven Werte von $\Delta R$ bei $\phi \approx 0°$ sind ohne Belang, da der Absolutwert sehr klein ist.

Auch bei diesem Ausführungsbeispiel ist es möglich, trotz der Verwendung eines lediglich eindimensionalen Gradienten des Brechungsindex, der sich lediglich längs des schwächer brechenden Hauptschnitts ändert, und zur Ebene des zweiten (anderen) Hauptschnitts spiegelsymmetrisch ist, und damit eingeschränkter Variationsmöglichkeit bei der Korrektur zusätzlich zu den Forderungen bezüglich Mitten- und Randdicke bestimmte Randbedingungen für die Abbildungsfehler einzuhalten:

Bei dem in den Fig. 25 bis 30 dargestellten erfindungsgemäßen Ausführungsbeispiel ist die Fehlerkorrektur so ausgelegt, daß für $\phi = 90°$ der Astigmastismus $\Delta S'$ bis zu Blickwinkeln $\sigma \approx = 30°$ in etwa 0 ist.

Die Berechnung des eindimensionalen Gradienten des Brechungsindex ist auch bei dem zweiten Ausführungsbeispiel für eine Zylinderwirkung von $+4,0$ dpt mit Spline-Funktionen erfolgt, der genaue Verlauf geht aus den Teilfiguren 26a und b hervor. Nähert man den mit Spline-Funktionen erhalten Brechungsindex n(y) im Bereich der optischen Achse wieder mit einer Taylorreihe an, so erhält man für den Koeffizienten $n_{2y}$

$$n_{2y} = -1,177 \cdot 10^{-4} \ [mm^{-2}].$$

Vorstehend ist die Erfindung anhand von Ausführungsbeispielen ohne Beschränkung des allgemeinen Erfindungsgedankens - einen Gradienten des Brechungsindex mit einer Vorzugsrichtung in Richtung des kritischen Hauptschnitts zu verwenden - beschrieben worden:

Innerhalb dieses allgemeinen Erfindungsgedankens sind selbstverständlich die verschiedensten Abwandlungen möglich:

Beispielsweise kann anstelle des bei den Ausführungsbeispielen verwendeten eindimensionalen Gradienten, bei dem der Brechungsindex lediglich von y abhängt, auch ein Verlauf des Brechungsindex gewählt werden, bei dem dieser zusätzlich von x abhängt und/oder in Axialrichtung variiert. Mit einem derartigen Gradienten können die Bildfehler in den Randbereichen sowie zwischen den Hauptschnitten weiter verringert werden. Auch ist es möglich, anstelle eines Glases mit sphärischen Flächen bzw. sphärischen Hauptschnitten ein asphärisches oder ein atorisches Glas, d.h. ein Glas mit wenigstens einem asphärischen Hauptschnitt, mit einem Brechungsindex-Gradienten gemäß der Erfindung zu versehen. Hierdurch ist ebenfalls eine weitere Verringerung der Abbildungsfehler und/oder der kritischen Dicke sowie der Randdicken-Variation möglich.

Bei den gezeigten Ausführungsbeispielen variiert der Brechungsindex praktisch bis zum Glasrand. Es ist aber auch möglich, nur eine Variation des Brechungsindex bis zum einem Blickwinkel $\sigma' \approx 30°$ zuzulassen und bei größeren Blickwinkeln den Brechungsindex konstant zu halten. Hierdurch wird die Herstellung des Glases vereinfacht, die aufgrund der lediglich eindimensionalen Hauptvariation im Vergleich zu anderen Vorschlägen für Brechungsindex-Gradienten bereits sehr vereinfacht ist.

Es versteht sich von selbst, daß bei anderen Achslagen des Auges, für das ein erfindungsgemäßes Glas verwendet werden soll, die Hauptschnitte entsprechend abweichend von den dargestellten Ausführungsbeispielen zu wählen sind.

Ferner ist bei den vorstehend beschriebenen Ausführungsbeispielen ein Gradient verwendet worden, der sich lediglich längs des kritischen Hauptschnittes und spiegelsymmetrisch zum zweiten Hauptschnitt ändert. Selbstverständlich ist es aber auch möglich, die Forderung der Spiegelsymmetrie zur Korrektur des sog. "Astigmatismus obliquus" unter Berücksichtigung der Listingschen Regel aufzugeben und/oder zusätzlich zweidimensionale Gradienten zu verwenden.

Auch aus der Tatsache, daß sämtliche vorstehend im einzelnen beschriebenen Ausführungsbeispiele Gläser mit positiver Wirkung sind, ist keine Beschränkung des allgemeinen Erfindungsgedankens abzuleiten. Eine Übertragung der vorstehenden technischen Lehre auf Gläser mit negativer Wirkung, bei denen die Randdicke verringert werden soll, oder auf Gläser, bei denen ein Hauptschnitt positive Wirkung und der andere negative Wirkung hat, und bei denen dann entsprechend sowohl die Mittendicke als auch die Randdicke verringert werden soll, ist für einen auf diesem Gebiet tätigen Fachmann ohne Schwierigkeiten möglich.

Die Herstellung der erfindungsgemäßen Brillengläsern kann mit einem der in der veröffentlichten Literatur beschriebenen Verfahren erfolgen. Hierzu wird auf den eingangs genannten Übersichtsartikel verwiesen.

**Patentansprüche**

1. Brillenglas mit astigmatischer Wirkung und mit einer Vorderfläche und einer augenseitigen Fläche, dadurch **gekennzeichnet**, daß zur Reduzierung der kritischen Dicke, d.h. der Mittendicke bei Gläsern mit positiver Wirkung bzw. der Randdicke bei Gläsern mit negativer Wirkung, und/oder der Variation der Randdicke längs des Glasumfangs der Brechungsindex mindestens über den für das Sehen wichtigen Teil des Brillenglases (Durchmesser wenigstens 40mm) einen Gradienten längs des kritischen Hauptschnitts, d.h. den die kritische Dichte bestimmenden Hauptmeridian aufweist, so daß wenigstens ein Teil der astigmatischen Wirkung durch die Variation des Brechungsindex aufgebracht wird, und daß die Funktion des Brechungsindex längs des kritischen Hauptschnitts sich von der Funktion des Brechungsindex längs des anderen Hauptschnitts unterscheidet.

2. Brillenglas nach Anspruch 1, dadurch **gekennzeichnet**, daß die Variation des Brechungsindex längs des kritischen Hauptschnitts spiegelsymmetrisch zur Ebene des zweiten (unkritischen) Hauptschnitts ist.

3. Brillenglas nach Anspruch 2, dadurch **gekennzeichnet**, daß Brechungsindex längs Ebenen konstant ist, die zu dem zweiten unkritischen Hauptschnitt parallel sind.

4. Brillenglas nach einem der Ansprüche 1 bis 3, dadurch **gekennzeichnet**, daß bis zu mittleren Zylinderwirkungen, d.h. bis ca. 2-3 dpt die astigmatische Wirkung ausschließlich durch die Variation des Brechungsindex aufgebracht wird.

5. Brillenglas nach Anspruche 4, dadurch **gekennzeichnet**, daß sowohl die Vorderfläche als auch die augenseitige Fläche sphärische Flächen sind.

6. Brillenglas nach Anspruch 2, 3 oder 4, dadurch **gekennzeichnet**, daß wenigstens eine der beiden Flächen eine rotationssysmmetrische asphärische Fläche ist, deren Verlauf die Bildfehler mindestens längs des zweiten unkritischen Hauptschnitts reduziert.

7. Brillenglas nach einem der Ansprüche 1 bis 3, dadurch **gekennzeichnet**, daß eine der beiden Flächen eine atorische Fläche ist.

8. Brillenglas nach einem der Ansprüche 1 bis 7, dadurch **gekennzeichnet**, daß bei Beschreibung der Brechzahlfunktion n(y) durch eine Taylorreihe

$$n(y) = n_o + n_{2y}{}^*y^2 + ....$$

für den Koeffizienten $n_{2y}$ [$m^{-2}$] gilt:

$$n_{2y} = (1-d{}^*D_{1y}/n_o){}^*[D_{1y}/(1-d{}^*D_{1y}/n_o) - D_{1x}/(1-d{}^*D_{1x}/n_o) + D_{2y} - D_{2x} - Zyl]/(2{}^*d)$$

hierbei sind:

| | |
|---|---|
| x, y | die sich in Richtung der Hauptschnitte erstreckenden Achsen eines kartesischen Koordinatensystem mit dem Ursprung im Scheitel des Brillenglases, |
| $D_{1x\ bzw.\ y}$ | Flächenbrechwert der Vorderfläche in x- bzw. y-Richtung |
| $D_{2x\ bzw.\ y}$ | Flächenbrechwert der augenseitigen Fläche in x- bzw. y-Richtung, |
| $n_o$ | Brechzahl in der optischen Achse, |
| d | Mittendicke, |
| Zyl | $S'_{oy} - S'_{ox}$ (Definition der Zylinderwirkung), |
| $S'_{oy}, S'_{ox}$ | die Wirkung in Richtung der Hauptschnitte im Scheitel des Brillenglases. |

**Claims**

1. Spectacle lens with astigmatic power and with a front surface and a surface on the eye side, characterised in that to reduce the critical thickness, i.e. the centre thickness in lenses with positive power or the edge thickness in lenses with negative power, and/or the variation in edge thickness along the lens circumference, the refractive index has, at least over the portion of the spectacle lens important for vision (diameter at least 40 mm), a gradient along the critical principal section, i.e. the principal meridian which determines the critical density, so that at least some of the astigmatic power is applied by the variation in refractive index, and in that the function of the refractive index along the critical principal section differs from the function of the refractive index along the other principal section.

2. Spectacle lens according to claim 1, characterised in that the variation in refractive index along the critical principal section is inversely symmetrical to the plane of the second (uncritical) principal section.

3. Spectacle lens according to claim 2, characterised in that the refractive index is constant along planes which are parallel to the second uncritical principal section.

4. Spectacle lens according to any of claims 1 to 3, characterised in that up to medium cylinder power, i.e. up to about 2-3 D, the astigmatic power is applied exclusively by varying the refractive index.

5. Spectacle lens according to claim 4, characterised in that both the front surface and the surface on the eye side are spherical surfaces.

6. Spectacle lens according to claim 2, 3 or 4, characterised in that at least one of the two surfaces is a rotationally symmetrical aspherical surface of which the progression reduces the image defects at least along the second uncritical principal section.

7. Spectacle lens according to any of claims 1 to 3, characterised in that one of the two surfaces is an atoric surface.

8. Spectacle lens according to any of claims 1 to 7, characterised in that when describing the refractive index function n(y) by a Taylor series

$$n(y) = n_o + n_{2y}*y^2 + ....,$$

the following holds true for the coefficient $n_{2y}$ [$m^{-2}$]:

$$n_{2y} = (1-d*D_{1y}/n_o)*[D_{1y}/(1-d*D_{1y}/n_o) - D_{1x}/(1-d*D_{1x}/n_o) + D_{2y} - D_{2x} - cyl]/(2*D)$$

where

| | |
|---|---|
| x,y | are the axes of a Cartesian coordinate system extending in the direction of the principal sections, with the origin at the vertex of the spectacle lens, |
| $D_{1x \text{ and } y}$ | are the surface power of the front surface in the x and y directions respectively, |
| $D_{2x \text{ and } y}$ | are the surface power of the surface on the eye side in the x and y directions respectively, |
| $n_o$ | is the refractive index in the optical axis, |
| d | is the centre thickness, |
| cyl | is $S'_{oy} - S'_{ox}$ (definition of cylinder power), |
| $S'_{oy}, S'_{ox}$ | are the power in the direction of the principal sections at the vertex of the spectacle lens. |

**Revendications**

1. Verre ophtalmique à effet astigmate comportant une face antérieure et une face postérieure, caractérisé en ce que, pour la réduction de l'épaisseur critique, c.à.d. de l'épaisseur du centre pour des verres à effet positif, respect. de l'épaisseur des bords pour des verres à effet négatif et/ou de la variation de l'épaisseur des bords le long de la circonférence du verre, l'indice de réfraction présente au moins sur la partie du verre ophtalmique importante pour la vue (diamètre d'au moins 40 mm) un gradient le long de la section principale critique, à savoir le méridien principal déterminant l'épaisseur critique, de sorte qu'au moins une partie de l'effet astigmate est produite par la variation de l'indice de réfraction et que la fonction de l'indice de réfraction le long de la section principale critique se différencie de la fonction de l'indice de réfraction le long de l'autre section principale.

2.     Verre ophtalmique selon la revendication 1, caractérisé en ce que la variation de l'indice de réfraction le long de la section principale critique est à symétrie de reflexion par rapport au plan de la deuxième section principale (non critique).

3.     Verre ophtalmique selon la revendication 2, caractérisé en ce que l'indice de réfraction le long des plans est constant, lesquels sont parallèles à la deuxième section principale non critique.

4.     Verre ophtalmique selon l'une des revendications 1 à 3, caractérisé en ce que, jusqu'aux effets cylindriques moyens, c.à d. jusqu'à env. 1 à 3 dioptries, l'effet astigmate est exclusivement produit par la variation de l'indice de réfraction.

5.     Verre ophtalmique selon la revendication 4, caractérisé en ce que la face antérieure ainsi que la face postérieure sont des surfaces sphériques.

6.     Verre ophtalmique selon la revendication 2, 3 ou 4, caractérisé en ce qu'au moins une des deux faces est une surface asphérique à symétrie de révolution dont la forme réduit les aberrations au moins le long de la deuxième section principale non critique.

7.     Verre ophtalmique selon l'une des revendications 1 à 3, caractérisé en ce qu'une des deux faces est une surface atorique.

8.     Verre ophtalmique selon l'une des revendications 1 à 7, caractérisé en ce que, lors de la description de la fonction d'indice de réfraction n(y) par une série de Taylor

$$n(y) = n_o + n_{2y}*y^2 + ....$$

on a pour le coefficient $n_{2y}$ $[m^{-2}]$ :

$$n_{2y} = (1-d*_{1y}/n_o)*[D_{1y}/(1-d*D_{1y}/n_o) - D_{1x}/(1-d*D_{1x}/n_o) + D_{2y} - D_{2x} - Zyl]/(2*d)$$

où
|  |  |
|---|---|
| x, y | sont les axes d'un système de coordonnées cartésiennes s'étendant dans la direction des sections principales, avec l'origine au sommet du verre ophtalmique, |
| $D_{1x}$, | respect. y est le pouvoir convergent de la face antérieure dans la direction x, respect. y, |
| $D_{2x}$, | respect. y est le pouvoir convergent de la face postérieure dans la direction x, respect. y, |
| $n_o$ | est l'indice de réfraction dans l'axe optique, |
| d | est l'épaisseur du centre, |
| Zyl | est $S'_{oy} - S'_{ox}$ (définition de l'effet cylindrique) |
| $S'_{oy}, S'_{ox}$ | est l'effet dans la direction de la section principale au sommet du verre ophtalmique. |

Fig. 1

Fig. 2

Fig. 3

Fig. 4

Fig. 5

Fig. 6

r (mm)

40

20

$\phi = 0°$

$\phi = 90°$

0

-20

$\phi = 45°$

-40

1.0    1.5    2.0

$\longrightarrow$ n

*Fig. 8a*

*Fig. 7a*

$\phi$ (°)

90

$\delta' = 30°$

50

0

1.0    1.5    2.0

$\longrightarrow$ n

*Fig. 7b*

*Fig. 8b*

Fig. 9

$\gamma = 45°$

Fig. 10

Fig. 11

$\Phi$

$\delta^{\prime} = 30^{\circ}$

$\longrightarrow \Delta S', \ \Delta R$ (in dpt)

*Fig. 12*

Fig. 13

Fig. 14

Fig. 15

Fig. 16

Fig. 17

Fig. 18

Fig. 19a

Fig. 20a

Fig. 19b

Fig. 20b

$\sigma'_2$

$\longrightarrow \Delta S',\ \Delta R$ (in dpt)

$\delta = 0°$

Fig. 21

Fig. 22

Fig.23

Fig. 24

Fig. 25a

Fig. 26a

Fig. 25b

Fig. 26b

Fig. 27

Fig.28

EP 0 300 415 B1

Fig. 29

$\phi = 90°$

Fig. 30